# EUROPÄISCHE PATENTSCHRIFT

(11) **EP 0 507 174 B1**
(45) Veröffentlichungstag und Bekanntmachung des Hinweises auf die Patenterteilung: **08.03.1995**
(21) Anmeldenummer: 92104974.8
(22) Anmeldetag: 23.03.1992
(51) Int. Cl.: C09C 1/34, C09C 1/36, C09C 1/40, C09C 1/00

(54) **Verfahren zur Herstellung Chromtrioxydhaltiger Pigmente**
Process for preparing chromiumtrioxide-containing pigments
Procédé de préparation de pigments contenant du trioxyde de chrome

(30) Priorität: 04.04.1991 DE 4110880
(43) Veröffentlichungstag der Anmeldung: 07.10.1992
(73) Patentinhaber: BAYER AG, 51368 Leverkusen (DE)
(72) Erfinder: Wilhelm, Volker, Dr., W-5060 Bergisch Gladbach 2 (DE); Messer, Dieter, Dr., W-5068 Odenthal (DE)

(56) Entgegenhaltungen:
- FR-A- 1 576 015
- NL-C- 51 863
- US-A- 3 201 270
- CHEMICAL ABSTRACTS, vol. 65, no. 5, 29. August 1965, Columbus, Ohio, US; V.P. PYRKOV: "Preparation of ceramic pigments of the spinel type belonging to the series NiO-Cr2O3", Spalte 6885D
- WORLD PATENTS INDEX DERWENT PUBLICATIONS LTD, LONDON, GB, ACCESSION NO. 79-66018B, WEEK 36; & SU-A-635 116

## Beschreibung

Die vorliegende Erfindung betrifft ein Verfahren zur Herstellung Chromat-freier Cr₂O₃-haltiger Pigmente mit Spinell-, Hämatit- oder Korund-Struktur.

Cr₂O₃ ist Bestandteil einer großen Zahl von Pigmenten unterschiedlicher Kristallstrukturen. Die Farben dieser Pigmente erstrecken sich über einen weiten Bereich des sichtbaren Lichtes. So erhält man im Spinellsystem (ZnMg)(Fe, Cr)₂O₄ durch Variation der Kationen Farbtöne von Ocker bis Dunkelbraun. Im System (ZnCo) (Cr, Al)₂O₄ können Farbtöne von Hellgrün bis Dunkelblau erhalten werden. Ebenfalls im Spinellsystem werden Schwarzpigmente erzielt. Die Färbung wird durch wechselnde Zusammensetzung der Oxide des Cu, Cr, Fe, Mn, Co, Ni hervorgerufen. Das Hämatitsystem (Fe, Cr)₂O₃ führt je nach Zusammensetzung zu verschiedenen Braun-Schwarz-Pigmenten.

Diese Pigmente sind technisch bedeutsam für die Anwendung im Lack, Kunststoff, Email und Keramik.

Durch Nachglühung von reinem Cr₂O₃ bzw. von Mischungen aus Cr₂O₃ und 0,1 - 5 % TiO₂ hergestellte Produkte werden als grüne im Korundgitter kristallisierende Pigmente bei speziellen Anwendungen z.B. im Kunststoff-, Lack- und Feuerfestsektor eingesetzt, bei denen vergröberte Primärteilchen gefordert werden.

In US-A-3 201 270, SU-A 635 116 (Abstract) und Chemical Abstracts, Vol. 65, No. 5, 6885 (1966) d - f wird Borsäure Chrom-haltigen Pigmenten beigemengt, um deren Farbton und die Farbintensität zu verbessern.

In FR-A-1 576 015 und NL-C 51 863 werden Oxide des Phosphors als Mineralisatoren Chrom-haltigen Pigmenten zugesetzt.

Alle diese Cr₂O₃-haltigen Pigmente werden hergestellt indem die entsprechenden Ausgangsoxide, Hydroxide oder unter den Reaktionsbedingungen Oxide bildende Verbindungen naß oder trocken gemischt, im Ofen geglüht und anschließend durch Mahlung auf die gewünschte Mahlfeinheit gebracht werden (DE-C 2 338 012 und DE-C 2 320 806).

Diese Verfahren haben jedoch den Nachteil, daß bei der Glühung Ofenklinker entstehen, die größere Mengen an Cr(VI) enthalten, An die Aufarbeitung, d.h. Aufmahlung dieser Pigmente, muß sich daher eine Waschung der Pigmente anschließen, das Cr(VI)-haltige Waschwasser einer aufwendigen reduktiven Nachbehandlung unterworfen und das Cr³⁺ als Cr(OH)₃ gefällt und abgetrennt werden.

Darüber hinaus ist bei der anschließenden Trocknung der gewaschenen Pigmente bzw. Farbkörper, eine partielle Rückbildung von Chromat nicht auszuschließen.

Chrom (VI)-freie, Cr₂O₃-haltige Farbkörper können gemäß der DE-A 3 118 966 durch den Zusatz von Antimon(III)oxid bei der Glühung erhalten werden. Antimon(III)oxid stellt aber einen physiologisch bedenklichen Arbeitsstoff dar.

Aufgabe dieser Erfindung ist daher die Bereitstellung eines Verfahrens, das die beschriebenen Nachteile nicht aufweist.

Überraschenderweise wurde nun gefunden, daß durch den Zusatz von Bor- und/oder Phosphorsäure zur Rohmischung vor der Glühung die Bildung von Chromat verhindert wird. Die Pigmente müssen nicht mehr gewaschen werden, so daß sie auch einer einfachen Trockenmahlung unterzogen werden können.

Gegenstand der vorliegenden Erfindung ist daher die Verwendung von Borsäure und/oder Phosphorsäure bei der Herstellung Chromat-freier Cr₂O₃-haltiger Pigmente mit Spinell-, Hämatit- oder Korund-Struktur durch Glühen einer der dem Pigment entsprechenden Rohstoffmischung ohne Waschung nach der Kalzinierung, wobei 0,5 - 10 Gew.-% Borsäure und/oder Phosphorsäure (gerechnet als B₂O₃ bzw. P₂O₅), bezogen auf die als Oxide gerechneten eingesetzten Rohstoffe, der Rohstoffmischung vor der Glühung zugesetzt werden. Diese Rohmischung wird anschließend nach den üblich bekannten Verfahren weiterverarbeitet. Borsäure- und Phosphorsäurezusätze oberhalb dieses Bereiches sind ebenfalls wirksam, aber wenig sinnvoll.

Aus Ullmann's Encyclopedia of Industrial Chemistry, Volume A5, 1986, Seite 554 ist zwar der Zusatz von Borsäure als Mineralisator bei der Herstellung von Spinellpigmenten bekannt. Bei der Verwendung von Borsäure als Mineralisator werden üblicherweise Mengen unterhalb der hier beanspruchten eingesetzt. Beim Einsatz so geringer Borsäuremengen werden jedoch im Falle Chrom-haltiger Spinelle keine Chrom(VI)-freien Produkte erzielt.

Im folgenden wird die Erfindung beispielhaft erläutert, ohne daß hierin eine Einschränkung zu sehen ist.

### Beispiele

### Beispiel 1

1 150 kg Cr₂O₃, 283 kg Fe₂O₃ und 600 kg CuO werden in 1 400 l Wasser suspendiert und gut miteinander vermischt. Anschließend wird dieser Mischung 30 kg H₃BO₃ zugesetzt. Diese Rohmischung wird in einem direkt beheizten Drehrohr bei 1 000°C geglüht. Nach der Glühung wird der Ofenklinker naß gemahlen. Der Ofenklinker ist Cr(VI) frei, so daß die Mahlsuspension direkt auf einem Trockner getrocknet werden kann. Nach dem Trocknen erhält man ein Cr(VI)-freies schwarzes Pigment.

### Beispiel 2 (Vergleichsbeispiel)

Es wird wie in Beispiel 1 verfahren, jedoch ohne Zusatz von Borsäure. Man erhält einen Ofenklinker mit einem Cr(VI)-Gehalt von ca. 200 ppm. Die naßgemahlene Pigmentsuspension wird in einer Filterpresse Cr(VI) frei gewaschen. Das Waschwasser wird gesondert gesammelt und mit FeSO₄ zu Cr³⁺ reduziert. Aus dieser Lösung wird das Cr³⁺ mit NaOH als Cr(OH)₃ gefällt und abgetrennt. Erst jetzt kann das Waschwasser als Abwasser abgegeben werden.

### Beispiel 3

Es wird wie in Beispiel 1 verfahren, nur daß anstelle von Borsäure die gleiche Menge Phosphorsäure eingesetzt wird. Man erhält einen Cr(VI)-freien Ofenklinker, der naß aufgemahlen und ohne zu waschen auf einem Bandtrockner getrocknet wird. Das fertige Pigment ist Cr(VI)-frei.

### Beispiel 4

In einem Pflugscharmischer werden 300 kg CoO, 640 kg Al(OH)₃ und 300 kg Cr₂O₃ trocken gemischt. Diesem Pulvergemisch wird eine Lösung von 100 l 85% Phosphorsäure in 100 l Wasser hinzugefügt und erneut homogenisiert. Die feuchte Mischung wird anschließend bei 1 200°C geglüht. Der blaue Ofenklinker ist Cr(VI)-frei und kann trocken bzw. naß aufgemahlen werden.

### Beispiel 5

Es wird wie in Beispiel 4 verfahren, nur daß anstelle von Phosphorsäure 30 kg Borsäure der Rohmischung zugefügt werden. Man erhält nach dem Glühen einen Chromatfreien Ofenklinker, der trocken oder naß aufgemahlen werden kann.

### Beispiel 6 (Vergleichsbeispiel)

Es wird wie bei Beispiel 4 verfahren, jedoch ohne Zugabe von Phosphorsäure. Der entstandene Ofenklinker ist stark Chromat-haltig, so daß das Chromat wie in Beispiel 2 beschrieben reduziert und als Cr(OH)₃ ausgefällt werden muß.

### Beispiel 7

350 kg Zinkoxid, 350 kg Eisenoxidgelb und 350 kg Cr₂O₃ werden zusammen mit 1 200 l Wasser und 40 kg Borsäure in einer Kugelmühle gut vermischte Diese Suspension wird in einen Drehtrommelofen gefüllt, bei 300°C getrocknet und anschließend bei 1 200°C geglüht. Der rotbraune Ofenklinker ist Chromat-frei. Er kann naß oder trocken zum Pigment aufgearbeitet werden, eine Reoxidation zu Chromat tritt nicht auf.

### Beispiel 8 (Vergleichsbeispiel)

Es wird wie in Beispiel 7 verfahren, jedoch ohne Zusatz von Borsäure. Man erhält einen stark Chromat-haltigen Ofenklinker. Die anfallenden Chromat-haltigen Waschwässer müssen einer wie in Beispiel 2 beschriebenen aufwendigen reduktiven Fällungs-Nachbehandlung unterzogen werden.

### Beispiel 9

650 kg FeO(OH), 350 kg Cr₂O₃ und 40 kg Borsäure werden trocken vermischt und diese Mischung bei 1 200°C geglüht. Es entsteht ein Chromat-freier, braun-schwarzer Farbkörper.

Eine Aufmahlung zum Pigment kann trocken oder naß erfolgen. Bei der nassen Aufmahlung kann auf die aufwendige reduktive Fällungsnachbehandlung verzichtet werden. Bei der Trocknung des naß aufgemahlenen Farbkörpers wird kein Chromat nachgebildet.

### Beispiel 10 (Vergleichsbeispiel)

Es wird wie in Beispiel 9 verfahren, nur daß auf den Einsatz von Borsäure verzichtet wird. Man erhält einen Ofenklinker, der ca. 300 ppm Chromat enthält. Bei der Aufarbeitung muß wieder die schon beschriebene Nachbehandlung des Waschwassers durchgeführt werden.

### Beispiel 11

650 kg α-FeO(OH) und 250 kg Cr₂O₃ werden mit 1 000 l Wasser und 20 l 85%iger Phosphorsäure vermischt.

Die Suspension wird in einen Drehtrommelofen gefüllt, bei 150°C getrocknet und anschließend bei 1 150°C geglüht. Man erhält einen braun-schwarzen, Chromat-freien Ofenklinker, der wie in Beispiel 9 weiterverarbeitet wird.

### Beispiel 12 (Vergleichsbeispiel)

Es wird wie in Beispiel 11 verfahren, ohne daß Phosphorsäure zugesetzt wird. Man erhält einen stark Chromathaltigen Ofenklinker. Das nach der Mahlung des Farbkörpers anfallende Waschwasser muß wieder, wie schon beschrieben, aufwendig nachbehandelt werden.

### Beispiel 13

1 000 kg Cr₂O₃ und 40 kg Borsäure werden in einem Pflugscharmischer trocken gemischt und diese Mischung in einem direkt beheizten Trominelofen bei 1 200°C geglüht. Der dunkelgrüne Ofenklinker ist Chromat-frei. Die Aufmahlung kann trocken oder naß durchgeführt werden. Im Falle einer Naßmahlung ist keine reduktive Fällungsnachbehandlung notwendig.

### Beispiel 14 (Vergleichsbeispiel)

Verfährt man wie in Beispiel 13 beschrieben, jedoch ohne Zusatz von Borsäure, erhält man einen Chromat-haltigen Ofenklinker. Das nach der Naßmahlung anfallende Waschwasser muß einer wie schon beschriebenen Nachbehandlung unterzogen werden.

### Beispiel 15

1 500 kg Cr₂O₃ und 20 kg TiO₂ werden zusammen mit 1 500 l Wasser und 50 kg Borsäure in einer Kugelmühle intensiv vermischt. Die Mischung wird in einen Drehtrommelofen gefüllt, bei 300°C getrocknet und anschließend bei 1 150°C geglüht. Der dunkelgrüne Ofenklinker ist Chromat-frei und kann, wie schon beschrieben, trocken oder naß aufgearbeitet werden.

### Beispiel 16 (Vergleichsbeispiel)

Verfährt man wie in Beispiel 15 beschrieben ohne Zusatz von Borsäure, erhält man stark Chromat-haltige Produkte. Das bei der Aufarbeitung anfallende Waschwasser muß reduktiv nachbehandelt werden, bevor es als Abwasser abgegeben werden kann.

## Patentansprüche

1. Verwendung von Borsäure und/oder Phosphorsäure bei der Herstellung Chromat-freier Cr₂O₃-haltiger Pigmente mit Spinell-, Hämatit- oder Korund-Struktur durch Glühen einer der dem Pigment entsprechenden Rohstoffmischung ohne Waschung nach der Kalzinierung, wobei 0,5 bis 10 Gew.-% Borsäure und/oder Phosphorsäure, gerechnet als B₂O₃ bzw P₂O₅ , der Rohstoffmischung vor der Glühung zugesetzt werden.

2. Verwendung gemäß Anspruch 1, dadurch gekennzeichnet, daß die Pigmente Mischphasenpigmente sind.

3. Verwendung gemäß Anspruch 1, dadurch gekennzeichnet, daß die Pigmente nachgeglühte Cr₂O₃-Pigmente mit Korund-Struktur sind.

4. Verwendung gemäß Anspruch 1, dadurch gekennzeichnet, daß die nachgeglühten Cr₂O₃-Pigmente einen TiO₂-Gehalt von 0,1 bis 5 Gew.-%, bezogen auf das Pigment, aufweisen.

## Claims

1. The use of boric acid and/or phosphoric acid when preparing chromate-free, Cr₂O₃-containing pigments with spinel, haematite or corundum structures by calcining a mixture of raw materials corresponding to the pigment, without washing after calcination, wherein 0.5 to 10 wt.% of boric acid and/or phosphoric acid, calculated as B₂O₃ or P₂O₅, are added to the mixture of raw materials before calcining.

2. A use according to Claim 1, characterised in that the pigments are mixed phase pigments.

3. A use according to Claim 1, characterised in that the pigments are recalcined Cr₂O₃ pigments with a corundum structure.

4. A use according to Claim 1, characterised in that the recalcined Cr₂O₃ pigments have a TiO₂ content of 0.1 to 5 wt.%, with reference to the pigment.

## Revendications

1. Utilisation de l'acide borique et/ou de l'acide phosphorique à la préparation de pigments contenant Cr₂O₃ mais exempts de chromate, à structure de spinelle, d'hématite ou de corindon, par calcination d'un mélange de matières premières correspondant à la nature du pigment sans lavage après calcination, dans lequel on ajoute au mélange de matières premières, avant la calcination, de 0,5 à 10% en poids d'acide borique et/ou d'acide phosphorique, exprimé respectivement en B₂O₃ et P₂O₅.

2. Utilisation selon revendication 1, caractérisée en ce que les pigments sont des pigments à phases mélangées.

3. Utilisation selon revendication 1, caractérisée en que les pigments sont des pigments de Cr₂O₃ calcinés à structure de corindon.

4. Utilisation selon revendication 1, caractérisée en ce que les pigments calcinés de Cr₂O₃ ont une teneur en TiO₂ de 0,1 à 5% de leur poids.
